# EUROPEAN PATENT APPLICATION

(11) **EP 4 831 881 A1**
(43) Date of publication of application: **28.10.2026**
(21) Application number: 25382407.2
(22) Date of filing: 23.04.2025
(51) Int. Cl.: G06Q 10/00, G01S 17/00, G06N 3/00, G06N 5/00, G08G 1/01

(54) **SYSTEM AND METHOD FOR MONITORING MIXED FLOWS OF PEOPLE AND VEHICLES IN RURAL AND NATURAL ENVIRONMENTS**

(71) Applicant: Anigami, S.L., 08224 Terrassa (Barcelona) (ES)
(72) Inventor: Costa Orriols, Gerard, 08569 Rupit (Barcelona) (ES); Vallès Juvé, Roger, 08511 L'Esquirol (Barcelona) (ES); Albanell Margarit, Aleix, 08569 Cantonigros (Barcelona) (ES)
(74) Representative: Clarke, Modet y Cía., S.L.

(57) **Abstract**

System and method for monitoring mixed flows of people and vehicles in rural and natural environments. The system comprises person and vehicle detection devices (2) equipped with a millimetre-wave radar (5) and a data processing unit (8) the purpose of which is to:
- classify the moving point cloud (10) of each radar scan using a previously trained artificial neural network (18) that receives as input the distance (12), the azimuth angle (13), the elevation angle (14), the Doppler velocity (15), and the signal-to-noise ratio (16) of each point (11) in the cloud of moving points (10), to yield a list (20) of targets classified by type (23) as a person (24) or a specific vehicle (28, 29, 30) from a list of vehicles (25),
- determine a trajectory (27) for each target (21),
- count each type (23) of target the trajectory (27) of which crosses a counting line (33).

A central server (3) monitors the flows of each type (23) of target using the count information (42).

## Description

### Field of the invention

This invention lies in the field of systems and methods for monitoring the movement of vehicles and people, particularly in natural environments in which there are no connections to the electricity grid.

### Background of the invention

Nature areas and zones of tourism or of natural interest in rural environments are increasingly frequented by people and vehicles and congestion is common, which has an impact on the natural environment and on the inhabitants of these rural areas. Congestion erodes the natural environment and undermines visitor experience because of crowding at sites. When sites become overcrowded, visitors overflow into the rest of the area, which often leads to a collapse of the services and capacities of the small towns and villages close to these nature sites.

The problem of congestion in these nature areas and rural environments can be solved by redistributing visitor demand evenly over time and by preventing visitor peaks. To do so, visitors can be provided with information so that they may decide when it is best to visit the sites with a view to reducing overcrowding, having a better experience and reducing their impact on the environment. These flows of people and vehicles can also be optimised by means of a land management plan to help to minimise the impact on the urban and natural environment and on local people and congestion in nature areas.

Optimisation of flows of people and vehicles requires prior knowledge of the congestion status of the urban or natural environment. There is therefore a need to monitor and manage, simultaneously, all types of flows of vehicles and people in remote, natural and/or rural environments so they may be dealt with in real time. Such monitoring in natural or rural areas also needs to be achieved without any mobile coverage and without access to the electricity grid, while its installation must be simple and not require any building work, and monitoring must be anonymous to prevent a sensation of surveillance or unease among visitors. It must also comply with current legislation on data protection.

There is currently no solution that meets all these requirements. This invention solves these problems by using an integrated system that fulfils all the required functions.

### Brief summary of the invention

The invention is a computer implemented system and method for monitoring mixed flows of people and vehicles in rural and natural environments.

This invention uses a millimetre-wave radar capable of detecting mixed traffic of any vehicle type (car, motorcycle, bicycle, personal mobility vehicles) and people. This device allows for the monitoring of mixed flows in areas with complex traffic such as a forest road upon which vehicles are heading towards a car park for which real-time information on its capacity are required, and, at the same time, people walking along the same road towards a point of interest when it is necessary to determine the number of people heading towards that point. As it is based on millimetre-wave radar and covers a large area, different counting zones are possible at the same time. For example, people at two entrances/exits can be counted simultaneously by placing a virtual counting line at each point seen from the millimetre-wave radar, as can vehicle movements through a different entrance/exit to the car park or forest road.

The millimetre-wave radar allows for monitoring of all these flows and as it can identify, locate and track targets within its coverage area. The system in this invention uses a combination of algorithms and neural networks trained with previous data for correct classification of the detected objects, thus allowing different types of mixed flows (people and vehicles) to be counted simultaneously in real time. The invention uses lightweight and efficient neural network models that can run on hardware with a very low power consumption. It may therefore operate in remote areas solely on battery power and without the need for connection to the power grid. Millimetre-wave radar also allows all the information required for monitoring people and vehicles to be collected anonymously, which renders cameras unnecessary while respecting privacy and without capturing any personal data (only electromagnetic wave reflections are measured). The device therefore complies with data protection regulations.

Once all the data has been collected, it is sent to a server for subsequent processing. In one embodiment, a management platform centralises all the captured data on the server, processes it, analyses it using different algorithms to generate patterns and predictions, and seeks correlations among the data to identify points of improvement. This platform allows for the implementation of a management plan on the ground and for verification with the data captured to determine whether it is operating correctly, with real-time intervention in the smart and global management of sites and territories in rural areas.

Unlike other monitoring systems that detect either only cars or only people, this invention allows for simultaneous detection of both people and vehicles (cars, motorcycles, buses, trucks, bicycles, etc.). This is very important because different traffic types circulate in rural and natural environments. Furthermore, the use of artificial intelligence (in particular, artificial neural networks) to classify objects, yields a more accurate and reliable classification of objects (vehicles, people, bicycles, etc.) than traditional methods based on clustering, velocity thresholds and SNR. Neural networks can learn complex patterns from millimetre-wave radar data, which therefore leads to reduction in classification errors.

This invention's system for monitoring mixed flows of people and vehicles in rural and natural environments comprises at least one person and vehicle detection device, where each person and vehicle detection device installed at a location in a rural or natural environment comprises:
- A millimetre-wave radar configured to run multiple scans of a coverage area at the respective location, wherein each scan yields a cloud of moving points that are associated with a distance, an azimuth angle, an elevation angle, a Doppler velocity and a signal-to-noise ratio.
- A wireless communication module.
- At least one battery.
- A data processing unit configured to:
   ∘ classify the moving point cloud of each millimetre-wave radar scan using a previously trained artificial neural network that receives as input the distance, azimuth angle, elevation angle, Doppler velocity and signal-to-noise ratio of each point of the moving point cloud, to yield a list of detected targets and their position, where each target is classified by type as a person or as a specific vehicle from a list of vehicles.
   ∘ track targets within the coverage area of the millimetre-wave radar in the multiple scans and determine a trajectory for each target.
   ∘ detect the crossing of each target's trajectory by a counting line.
   ∘ count each type of target the trajectory of which crosses the count line in accordance with the trajectory's direction.
   o Send, via the wireless communication module, information related to each target type's count to a central server.
- The central server, configured to monitor the flows of each target type in the rural or natural environment using the count information received.

The invention allows for the smart, integrated management of a nature area, a municipality, or even an entire region, and makes data available for an entire territory, not only regarding the movement of people through points, but also car park capacity, vehicle flows on access roads, the status of reservations at restaurants and hotels, etc. All this information can be integrated in different areas, be it a micro level (e.g., a tourist attraction with a car park and trails) or an ensemble of tourist attractions such as a natural park. This is simultaneously integrated with all the data from its access roads and the surrounding municipalities, which in turn are affected by the number of visitors to these same nature areas. The data on flows of people and vehicles obtained in groups of villages and nature areas can be used to redistribute visitor flows among these areas when they reach their capacity limit. The data can even be aggregated at a higher level (provincial, national, etc.). This creates a window of potential for optimising the management of flows of people and vehicles and makes it possible to lessen the impact of tourism on unique nature areas and to reduce overcrowding. In addition, having real-time data on the number of visitors to nature or urban areas makes for more accurate monitoring of forest surveillance, fire prevention and emergency service reinforcement in response to expected visitor numbers.

### Brief description of the drawings

There follows a very brief description of a series of drawings provided to explore the invention in more detail. They refer expressly to one embodiment of the invention, which is presented as a non-limiting example of it.
Figure 1 shows a block diagram of the components of a system for monitoring mixed flows of people and vehicles in rural and natural environments.
Figure 2 provides an example of how the system is applied to a rural environment.
Figure 3 shows a classification of targets by the artificial neural network using the moving point cloud.
Figure 4 illustrates the generation of trajectories based on the positions of targets in multiple millimetre-wave radar scans.
Figure 5 shows a method by which the invention identifies and counts targets using a millimetre-wave radar.
Figure 6 is a flow diagram of a method for monitoring mixed flows of people and vehicles in rural and natural environments.
Figure 7 shows an embodiment of the hardware components of the person and vehicle detection device.

### Detailed description of the invention

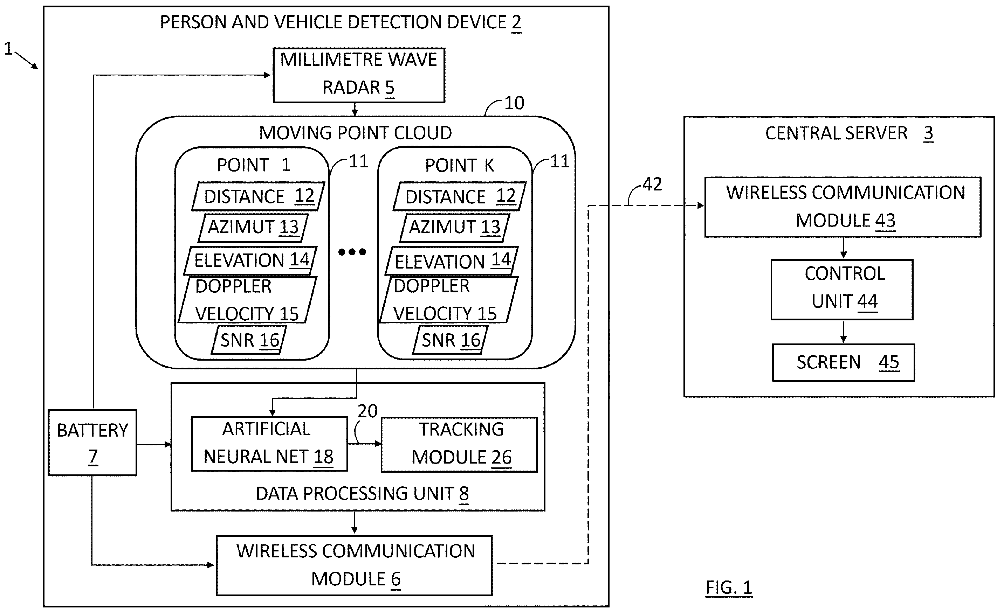

**Figure** 1 shows a diagram of the components of a smart system for monitoring mixed flows of people and vehicles in rural and natural environments. System 1 comprises at least one person and vehicle detection device 2, in wireless communication with a central server 3. For the simplicity's sake, Figure 1 shows a single person and vehicle detection device 2, although system 1 may include more than one device.

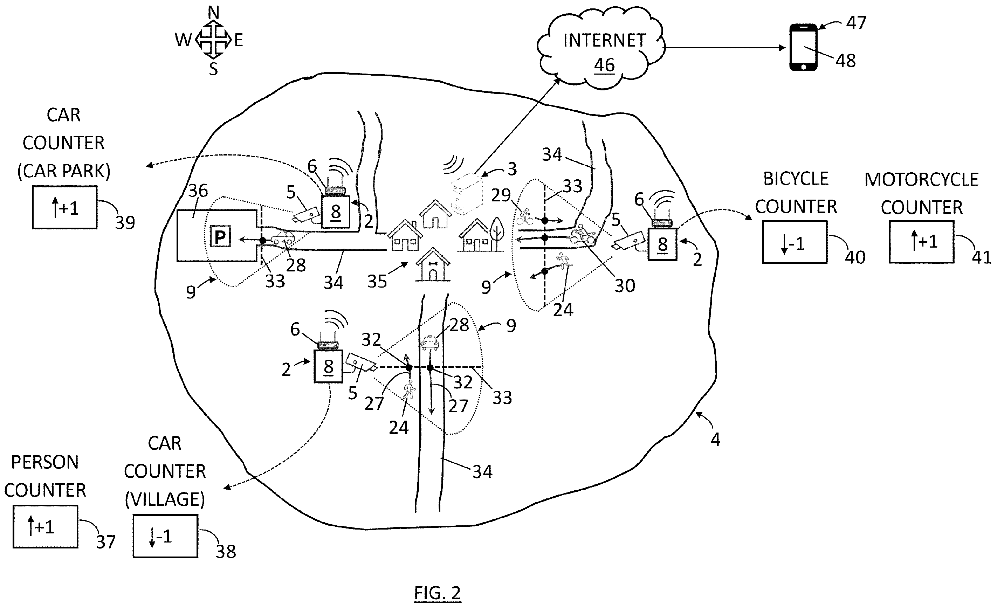

Each person and vehicle detection device 2 is installed at a predetermined location in a rural or natural environment 4, such as the locations shown in the example in **Figure 2** (three person and vehicle detection devices 2 located on roads or tracks 34 to the south, west and east of village 35), and comprises a millimetre-wave radar 5, a wireless communication module 6, at least one battery 7 to power the electronic components of the person and vehicle detection device 2, and a data processing unit 8.

The millimetre-wave radar 5 is configured to make multiple scans of a coverage area 9 at the respective location, with each scan yielding a moving point cloud 10 ({Point 1, Point 2, ..., Point K}), wherein each point 11 of the moving point cloud 10 has an associated distance 12, an azimuth angle 13, an elevation angle 14, a Doppler velocity 15 and a signal- to-noise ratio 16 (SNR, received signal to received noise ratio).

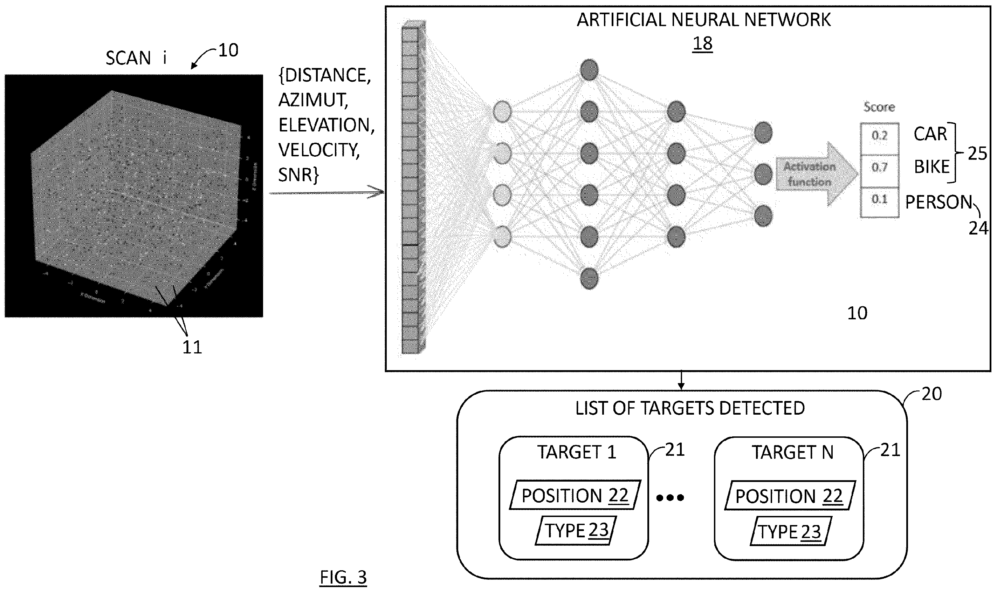

The data processing unit 8 includes a classifier, based on a pre-trained artificial neural network 18, configured to classify the moving point cloud 10 of each scan of the millimetre-wave radar 5. By way of an example, in **Figure 3** the artificial neural network 18 receives as input the distance 12, the azimuth angle 13, the elevation angle 14, the Doppler velocity 15 and the signal-to-noise ratio 16 of each point 11 of the moving point cloud 10 obtained in a scan *i*, which yields a list 20 of detected targets 21 ({Target 1,.... , Target N}) and their position 22, where each target 21 is classified by type 23 as a person 24 or as a specific vehicle from a list of vehicles 25 (although in the example in Figure 3 the list of vehicles 25 includes a car and bicycle, it could include additional or different vehicles). In any given scan, one, several or no targets 21 may be detected, depending on the presence of targets 21 within the coverage area of the millimetre-wave radar 5.

Unlike neural networks used for image recognition, in which a large amount of input data must be processed (for example, in image recognition of 412x412 RGB pixels, with three (R,G,B) values for each pixel, the neural network would work with an input data volume of 412x412x3 = 509232 data points), this invention's artificial neural network 18 uses a much smaller input data volume. Specifically, the moving point cloud 10 obtained by millimetre-wave radar 5, for each point 11 provides a distance 12, an azimuth angle 13, an elevation angle 14, a Doppler velocity 15 and a signal-to-noise ratio 16. Unlike an image, which provides a value for all pixels, regardless of whether they contain useful information or not, the millimetre-wave radar 5 only provides useful information, since the points 11 of the moving point cloud 10 correspond, very reliably, to an object.

By providing only these points 11 detected as input data of the artificial neural network 18, the amount of computation that the neural network must perform is substantially reduced because, for example, in a use case with multiple targets detected by the radar there would typically be a range of between twenty and one hundred points 11 as input data. Given that each point 11 has five possible variables (distance, azimuth, elevation, Doppler velocity, SNR), the data points ingested by the neural network are typically in the range of a few hundred. These calculations may therefore be made very quickly on small, low-power processors.

Operating in this mode requires an artificial neural network 18 that is capable of functioning with variable-length input data. Such inputs are known as irregular tensors.

Considering that system 1 of this invention performs detections that occur sequentially over time as a target moves along the field of view of the millimetre-wave radar 5 and that it will therefore be detected several times, the capacity to take these temporal characteristics into account has been implemented to improve target detection and classification. This involves consideration of factors such as the trajectory and linear velocity of the target itself, for which the artificial neural network 18 preferably has a recurrent neural network (RNN) structure.

The recurrent neural network is designed to process data sequences, where information from previous steps influences interpretation of current steps. In this case, the sequence is formed by the data from the millimetre-wave radar 5 captured at successive instants of time *(t, t+1, t+2,* ...). The input at each time step t is the point cloud detected at that moment, represented by the irregular tensor *Xₜ* with shape (*Nₜ,* 5) where *Nₜ* corresponds to the number of points 11 detected by the millimetre-wave radar 5 at each time step t. The recurrent neural network has a hidden status *hₜ* which represents a memory that summarises relevant information from all previous time steps. This memory is updated at each time step. At each time step t, processing is as follows:
1) At time step t, the recurrent neural network receives two inputs:
   a. The irregular tensor *Xₜ* with the distance data 12, azimuth angle 13, elevation angle 14, Doppler velocity 15, and signal-to-noise ratio 16 of the *Nₜ* points detected at that instant.
   b. The hidden status from the previous step *hₜ₋₁* with the information from the previous time steps.
2) Using *Xₜ* and *hₜ₋₁,* the recurrent neural network calculates the new hidden status *hₜ* and calculates the different matrix operations in the weight matrices and performs activation functions defined previously in the training.
3) On the basis of the new hidden status *hₜ,* an output *Yₜ* is calculated for each time step.

The output *Yₜ* represents the classification and status of the detected objects at each time step *t.* Using the output sequence (..., *Yₜ₋₂, Yₜ₋₁, Yₜ*), the data processing unit 8 calculates the trajectory of each target and analyses whether that trajectory crosses any counting line and, if so, in which direction of movement.

Training the recurrent neural network involves use of a standard BPTT (Back Propagation Through Time) algorithm. As it depends on the time variable and the variation of the hidden status, the recurrent neural network must be trained with point cloud input sequences of length *T.* In the training process, sequences of *T* time steps are provided with output labels featuring the correct information for each input sequence. The training algorithm then calculates the weights of the parameters of the layers of the neural network and undertakes to optimise them to maximise the correct output result. The data used for training have been obtained manually using the millimetre-wave radar 5, capturing point sequences of all traffic types, which are subsequently labelled manually for use in training.

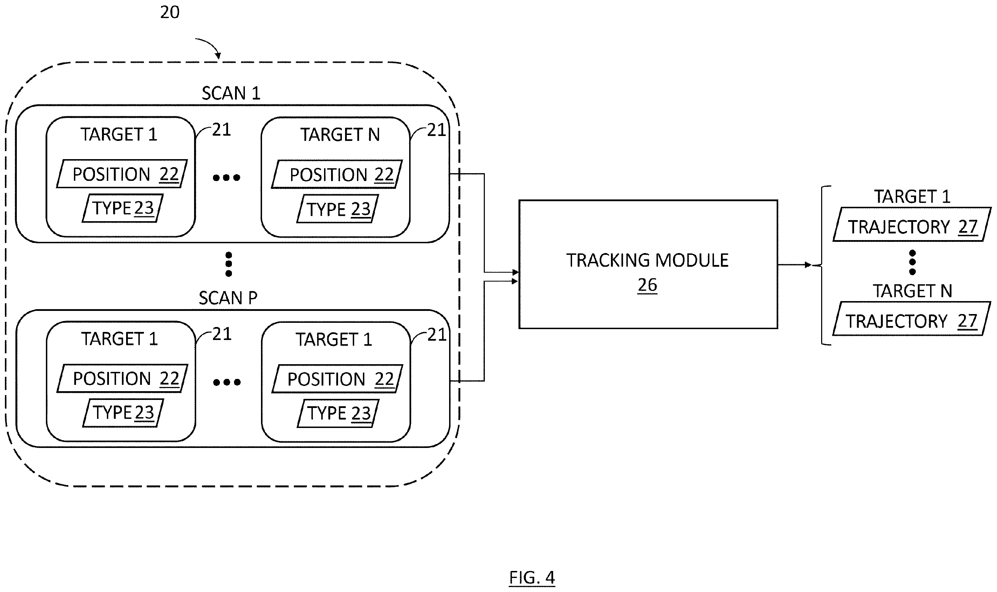

As illustrated in **Figure 4****,** the data processing unit 8 includes a tracking module 26 that implements a tracking algorithm for the positions 22 of the targets 21 detected within the coverage area 9 of the millimetre-wave radar 5 in multiple scans ({Scan 1,..., Scan P}), determining a trajectory 27 for each detected target 21 ({Target 1,..., Target N}). Figure 2 shows, by way of an example, the trajectories 27 determined for different people 24 and vehicles (cars 28, bicycle 29, motorcycle 30) detected by the different person and vehicle detection devices 2 installed in the rural or natural environment 4.

The data processing unit 8 is also configured to detect the crossing 32 or passing point of the trajectory 26 of each target 21 by a counting line 33, which is a virtual line (preferably straight) predefined within the coverage area 9 of each millimetre-wave radar 5, and to count each type 23 of target (person 24, car 28, bicycle 29, motorcycle 30) the trajectory 27 of which crosses the counting line 33 in accordance with the trajectory direction 27, represented in Figure 2 by an arrow. Hence:
- In the person vehicle detection device 2 located at the south of village 35 in Figure 2, a counter 37 associated with the number of people 24 entering village 35 would increase by one (the pedestrian is heading towards the village 35) and a counter 38 for the number of cars 28 entering village 35 would decrease by one (the car 28 at that location is leaving the village 35).
- In the person vehicle detection device 2 located at the west of village 35 in Figure 2, a counter 39 of the number of cars 28 entering car park 36 would increase by one, as car 28 next to car park 36 is heading inside it.
- In the person vehicle detection device 2 located at the east of village 35, a counter 40 of the number of bicycles 29 entering village 35 would decrease by one (bicycle 29 is heading out of village 35) and a counter 41 of the number of motorcycles 30 entering the village 35 would increase by one (motorcycle 30 is heading towards village 35).

The data processing unit 8 sends to the central server 3, via the wireless communication module 6, information 42 regarding the count of each type 23 of target (for example, the increases or decreases occurring in the counters of the different targets 21). For wireless data transmission, any radio or cellular technology such as LoRa and NB-IoT ("Narrowband-Internet of Things") could be used. In the example in Figure 2, although the central server 3 is located within village 3 itself, it could be installed elsewhere (e.g., a nearby city) or at a data processing centre.

Central server 3 receives the count information 42 via a respective wireless communication module 43 and processes this information in a control unit 44 (e.g. a processor), which is configured to monitor the flows of each type 23 of target in the rural or natural environment 4 using the count information 42 received. The results of monitoring may include the current counts of people and vehicles at the different access points monitored by the millimetre-wave radars 5. These results can be displayed in real-time on a screen 45 of the central server 3, and printed, for example, at the respective locations on a map of the rural or natural environment 4, or they can be sent (e.g., on-line 46) to one or more remote devices 47 to be displayed on a screen 48 of the remote device 47. The results may, for example, be sent to smartphones using ad-hoc applications or via a webpage.

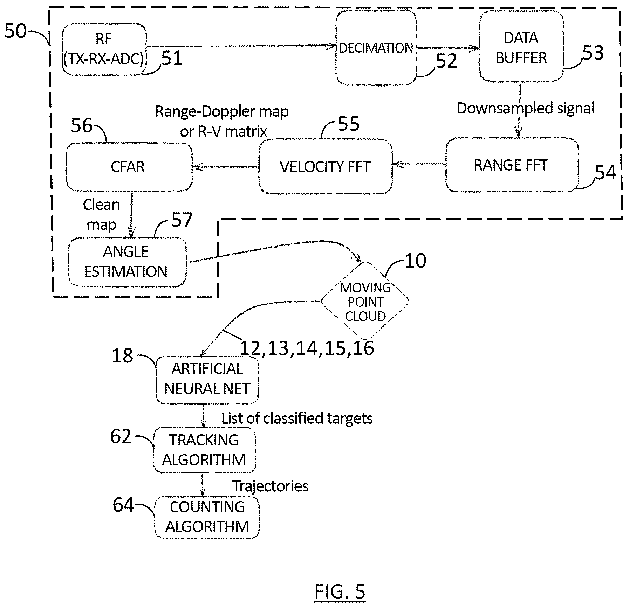

**Figure** 5 shows a method for identifying and counting different types of targets using a millimetre-wave radar 5 according to one embodiment of the invention. Process 50 by which the millimetre-wave radar 5 obtains the moving point cloud 10 is performed as per the state of the art as it entails the standard processing of any millimetre-wave radar. Process 50 involves the following stages:
- Radiofrequency stage 51: the transmitter (TX) generates and broadcasts radio waves (radar signals). The receiver (RX) receives the echoes of these waves that bounce off objects. The analogue-to-digital converter (ADC) converts the analogue signals received (echoes) into digital data. The output of the ADC is the raw digital data that represents the sampled radio wave.
- Decimation 52: it receives raw digital data from the ADC and reduces the data sampling rate in order to reduce the amount of data to be processed without losing any relevant information for the frequencies of interest and to help to prevent aliasing.
- Data buffer 53: it temporarily stores the filtered data (with a reduced sampling rate). It is required to accumulate enough data (corresponding to several frequency sweeps, for example) before it can be processed in the subsequent steps. The output is a subsampled signal prepared for analysis.
- Fast Fourier Transform for range 54 (1D FFT): it receives the signal from data buffer 53 and applies a Fast Fourier Transform (FFT) to the samples of each frequency sweep individually, thus converting the signal from the time-domain to the frequency-domain. The resulting frequency within a frequency sweep is associated directly with the signal's round-trip time, which indicates the distance to the object (range).
- Fast Fourier Transform for velocity 55 (2D FFT): it receives the **FFT** results for range 54 (generally organised in a matrix in which each column represents a frequency sweep and each row a "range cell"). It applies a second **FFT,** this time across the different frequency sweeps for each range cell. It analyses how the signal phase changes at the same distance over time (between successive frequency sweeps). This phase shift (Doppler effect) is proportional to the object's radial velocity. The output is a Range-Doppler map or R-V (Range-Velocity) matrix, which shows the detected energy as a function of distance and velocity.
- CFAR 56 (Constant False Alarm Rate): this detection algorithm analyses the Range-Doppler map and establishes a dynamic detection threshold based on the surrounding noise level in each cell. Its purpose is to distinguish the echoes of real objects from background noise, while maintaining a constant probability of erroneous detection of noise as if it were an object (false alarm). The output is a clean map that features the detections that exceed the threshold, considered to be real objects.
- Angle estimation 57 based on the phase in the receivers: it receives the clean map with the detections and uses the phase difference of the signal received by the radar's multiple receiver antennas. The difference in the path travelled by the wave to each antenna causes a phase difference. By measuring this phase difference for a given detection, the signal's angle-of-arrival (azimuth and/or elevation) may be calculated, thus indicating the direction of the object.

Differences between the state-of-the-art and this invention begin once the moving point cloud 10 is obtained. The moving point cloud 10 is a series of points 11 that are signals detected by the millimetre-wave radar 5. The moving point cloud 10 is obtained after applying CFAR ("Constant False Alarm Rate") techniques to eliminate all signals coming from static reflections or background noise. Once all these static points have been removed, the millimetre-wave radar 5 is left only with the moving points, which correspond to signals reflected from moving objects. These signals do not necessarily correspond to a single object. An object can generate multiple reflections that are received by the millimetre-wave radar. Therefore, depending on the object's reflectivity and position, a few moving points or dozens of points may appear for the same object.

Conventionally, in the state-of-the-art, the first step taken is the decomposition of the angles and distance of the target to obtain its Cartesian coordinates, which is followed by the application of clustering algorithms with a view to grouping these points by similarity. For example, the points of a single object will have a very similar Doppler velocity, as the object cannot move at two different velocities at the same time. Furthermore, similar signal-to-noise ratio (SNR) values indicate that it is the same object because of its similar reflectivity characteristics. Once clustering is complete, the new points (centred at the geometric centre of all the previously detected points) are thereafter referred to as targets, as they can be considered a single object. Next, each target is classified according to its characteristics, using fixed constraints and parameters, with a view to placing it within a range of velocities, and SNR to determine whether it is a car, person, or bicycle, etc.

Clustering and subsequent target classification is, however, very complex, as all the values received from each point are closely related. In conventional methods several problems hamper accurate simultaneous classification of different types of targets. To classify multiple targets, a table of characteristics must be defined for each target and assigned to the target that fulfils the greatest number of characteristics. Classification could be improved by adding variables to the calculation. These variables are inferred from values provided by the millimetre-wave radar, for example:
- in accordance with the quantity of points of the target's cluster points, through use of an additional algorithm to determine the target's volume.
- the SNR could be standardised in accordance with the target's distance and classified according to its reflectivity.
- Its Cartesian coordinate variation could be used to determine the linear velocity of the object and that would allow the target in question to be filtered by velocity.

Although all these calculations help in applying filters to improve classification, they nonetheless all originate from the same data source and, therefore, provide no new information. Simultaneous consideration of all these variables is very difficult. Moreover, there are target types that share ranges for these measurements (the similar volumes of a bicycle and a motorcycle, for example, and similar velocities of a person and a slowly moving bicycle, etc.).

Bearing in mind these drawbacks in the state-of-the-art, in this invention, all the points 11 of the moving point cloud 10 are directly injected into an artificial neural network 18 that works directly with the data of distance 12, azimuth 13, elevation 14, Doppler velocity 15, and SNR 16. The artificial neural network 18 is pre-trained with real captured and classified data, using a training dataset that includes labelled moving point clouds 10 of different targets (e.g., cars, trucks, motorcycles, bicycles, people, animals), in order to directly classify all the points 11 and upon their output return a list of the targets present in each scan of the millimetre-wave radar and their position. Once a list 20 of identified and classified targets has been obtained, a tracking algorithm 62 sets about monitoring over time each target 21 identified to determine their trajectories 27. Lastly, a counting algorithm 64 determines whether the trajectories 27 cross specific counting lines 33 to count each target type, while determining whether the identified targets count towards one direction or another (a count increase or decrease) when passing through the counting lines 33. This method allows for classification of many more target types and offers much greater reliability than traditional methods.

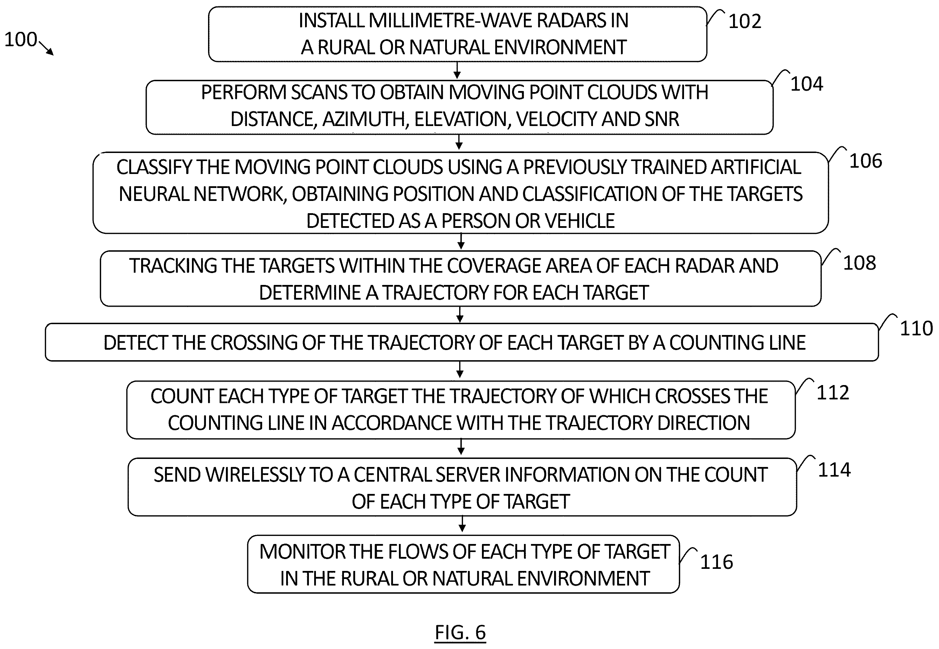

**Figure 6** shows a flowchart of a method 100 for monitoring mixed flows of people and vehicles in rural and natural environments 4 based on one embodiment of this invention. Method 100 involves the following steps:
- Installation at least one millimetre-wave radar 5 at least one location in a rural or natural environment 4.
- Performance, by each millimetre-wave radar 5, of multiple scans 104 of a coverage area 9 at the respective location, with each scan yielding a cloud of moving points 10 that are associated with a distance 12, an azimuth angle 13, an elevation angle 14, a Doppler velocity 15, and a signal-to-noise ratio 16.
- Classification 106 of the moving point cloud 10 of each scan of each millimetre-wave radar 5 using a previously trained artificial neural network 18 that receives as input the distance 12, the azimuth angle 13, the elevation angle 14, the Doppler velocity 15, and the signal-to-noise ratio 16 for each point 11 of the moving point cloud 10, to yield a list 20 of detected targets and their position 22, where each target 21 is classified by type 23 as a person 24 or as a specific vehicle (28, 29, 30) from a list of vehicles 25.
- Tracking 108 of the targets 21 within the coverage area 9 of each millimetre-wave radar 5 in the multiple scans, and determination of a trajectory 27 for each target 21.
- Detection 110 of the crossing 32 of trajectory 27 of each target 21 by a counting line 33.
- Counting 112 of each type 23 of target the trajectory 27 of which crosses counting line 33, in accordance with the trajectory direction 27.
- Sending 114, wirelessly to a central server 3, information 42 regarding the count of each type 23 of target.
- Monitoring 116, by the central server 3, of the flows of each type 23 of target in the rural or natural environment 4 using the count information 42 received.

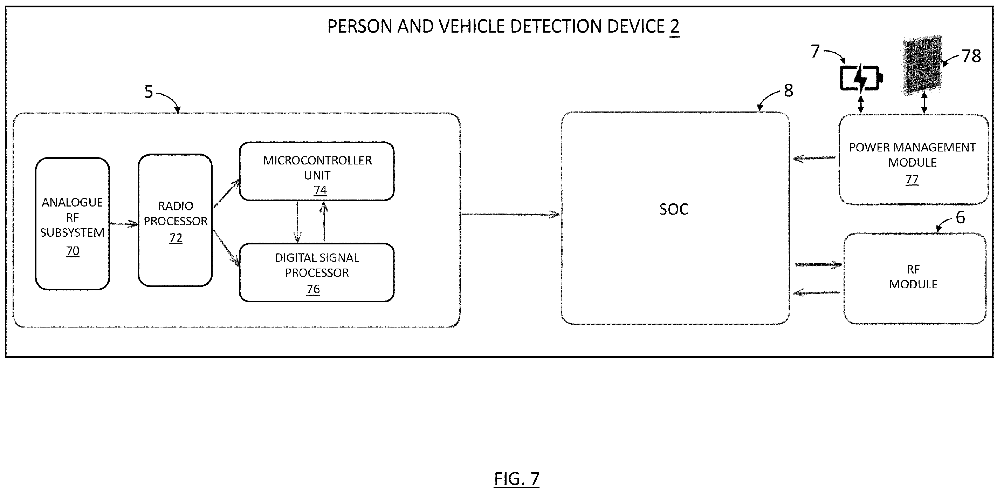

Figure 7 shows a possible implementation of the hardware of the person and vehicle detection device 2. In this example, the millimetre-wave radar 5 incorporates an analogue RF subsystem 70, which integrates multiple radio transmitters and receivers to transmit and receive millimetre-wave radar signals, as well as a radio processor 72 with analogue-to-digital converters to convert and process the analogue signals received, plus the necessary electronics for their initial processing. The processed millimetre-wave radar signals are sent to two blocks, a microcontroller unit 74 (MCU) and a digital signal processor 76 (DSP).

The digital signal processor 76 is a microcontroller that specialises in signal processing tasks, and therefore the operations in which the processor may be used are limited, albeit extremely fast and efficient in signal handling. It is in this microcontroller that most of the operations necessary to start working with the received signal are performed. The microcontroller unit 74 performs subsequent processing and prepares the information detected to be sent to the data processing unit 8. The firmware of both blocks (MCU and DSP) offers the functionality necessary to subsequently process the data in the artificial neural network 18.

The data processing unit 8 is implemented in a system on a chip (SoC), which incorporates a multi-core processor, optimised to perform calculations associated with artificial neural networks (tensors). The system on a chip undertakes to implement the artificial neural network 18 for the identification and classification of targets, the tracking module 26 for calculation of the trajectories 27 of the targets, and an algorithm for counting targets. In the microcontroller unit 74 and the digital signal processor 76 of the millimetre-wave radar 5, the steps of process 50 shown in Figure 5B are performed, with a view to sending the SoC the data received by the radar in the input tensor format of the neural network and relieving the SoC processor of that entire workload, which is performed instead in the radar processor, specifically designed and optimised for this purpose. The millimetre-wave radar 5 sends the subsequent irregular tensor *Xₜ* with shape (*Nₜ,*5) to the SoC, where *Nₜ* varies according to the number of points 11 of the moving point cloud 10 at each time step t (wherein λ is the azimuth angle 13, α the elevation angle 14, d the distance 12, *f'* the Doppler velocity 15, and SNR the signal-to-noise ratio 16 of each of the points {a, b, c,..., n}): $\left(\begin{matrix}{λ}_{a} & {α}_{a} & {d}_{a} & {f}_{a}^{′} & {SNR}_{a} \\ {λ}_{b} & {α}_{b} & {d}_{b} & {f}_{b}^{′} & {SNR}_{b} \\ {λ}_{c} & {α}_{c} & {d}_{c} & {f}_{c}^{′} & {SNR}_{c} \\ ⋮ & ⋮ & ⋮ & ⋮ & ⋮ \\ {λ}_{n} & {α}_{n} & {d}_{n} & {f}_{n}^{′} & {SNR}_{n}\end{matrix}\right)$

The system on a chip also handles the system's energy management and communicates with a power management module 77 that manages the battery 7 power supply and regulates its charging, if the person and vehicle detection device 2 is installed with a solar panel 78 for greater autonomy.

The system on a chip additionally undertakes to manage communications through the wireless communication module 6, by means of a radio frequency module that allows for wireless data transmission with different radio technologies, such as LoRa and NB-IoT.

## Claims

1. A system for monitoring mixed flows of people and vehicles in rural and natural environments that comprises:
at least one person and vehicle detection device (2), in which each person and vehicle detection device (2) is installed at a location within a rural or natural environment (4), and includes:
a millimetre-wave radar (5) configured to perform multiple scans of a coverage area (9) at the respective location, wherein each scan yields a cloud of moving points (10) that are associated with a distance (12), an azimuth angle (13), an elevation angle (14), a Doppler velocity (15), and a signal-to-noise ratio (16),
a wireless communication module (6),
at least one battery (7), and
a data processing unit (8) configured to:
classify the moving point cloud (10) of each millimetre-wave radar scan (5) using a previously trained artificial neural network (18) that as input receives the distance (12), the azimuth angle (13), the elevation angle (14), the Doppler velocity (15), and the signal-to-noise ratio (16) of each point (11) of the moving point cloud (10), to yield a list (20) of detected targets and their position (22), where each target (21) is classified by type (23) as a person (24) or as a specific vehicle (28, 29, 30) from a list of vehicles (25),
track the targets (21) within the coverage area (9) of the millimetre-wave radar (5) across multiple scans, and determine a trajectory (27) for each target (21),
detect the crossing (32) of the trajectory (27) of each target (21) by a counting line (33),
count each type (23) of target the trajectory (27) of which crosses the counting line (33) in accordance with the trajectory direction (27), and
send to a central server (3), via wireless communication module (6), information (42) regarding the count of each type (23) of target, and
the central server (3), configured to monitor the flows of each type (23) of target in the rural or natural environment (4) using the count information received (42).

2. The system according to claim 1, wherein the central server (3) is configured to display on a screen (45) counts of people (24) and vehicles (28, 29, 30), classified by type (23), received from each person and vehicle detection device (2).

3. The system according to either of the preceding claims, wherein the central server (3) is configured to send counts of people (24) and vehicles (28, 29, 30), classified by type (23), received from each person and vehicle detection device (2), to a remote device (47) to be displayed on a screen (48) of the remote device (47).

4. The system as claimed in any one of the preceding claims, wherein each millimetre-wave radar (5) comprises an analogue RF subsystem (70), a radio processor (72), a microcontroller unit (74), and a digital signal processor (76).

5. The system as claimed in any one of the preceding claims, wherein each person and vehicle detection device (2) comprises a power management module (77) that manages the battery supply (7), and wherein each data processing unit (8) comprises a system on a chip configured to manage the system's power by means of communication with the power management module (77).

6. The system according to claim 5, wherein each person and vehicle detection device (2) comprises at least one solar panel (78), connected to the power management module (77).

7. The system as claimed in any one of the preceding claims, wherein each wireless communication module (6) is a radio frequency module.

8. The system as claimed in any one of the preceding claims, wherein the artificial neural network (18) is a recurrent neural network.

9. A method for monitoring mixed flows of people and vehicles in rural and natural environments, comprising:
installation of at least one millimetre-wave radar (5) in at least at one location in a rural or natural environment (4),
performance, by each millimetre-wave radar (5), of multiple scans of a coverage area (9) in the respective location, to yield in each scan a cloud of moving points (10) that are associated with a distance (12), an azimuth angle (13), an elevation angle (14), a Doppler velocity (15), and a signal-to-noise ratio (16),
classification of the moving point cloud (10) of each scan of each millimetre-wave radar (5) using a previously trained artificial neural network (18) that receives as input the distance (12), the azimuth angle (13), the elevation angle (14), the Doppler velocity (15), and the signal-to-noise ratio (16) of each point (11) of the moving point cloud (10), to yield a list (20) of detected targets and their position (22), wherein each target (21) is classified by type (23) as a person (24) or as a specific vehicle (28, 29, 30) from a list of vehicles (25),
tracking of the targets (21) within the coverage area (9) of each millimetre-wave radar (5) across multiple scans, and determination of a trajectory (27) for each target (21),
detection of the crossing (32) of the trajectory (27) of each target (21) by a counting line (33),
counting each type (23) of target the trajectory (27) of which crosses the counting line (33) in accordance with the trajectory direction (27),
sending wirelessly to a central server (3) information (42) regarding the count of each type (23) of target, and
monitoring, by the central server (3), of the flows of each type (23) of target in the rural or natural environment (4) using the count information received (42).

10. The method as claimed in claim 9, which comprises displaying on a screen (45) of the central server (3) counts of people (24) and vehicles (28, 29, 30), classified by type (23).

11. The method as claimed in either of the preceding claims 9 to 10, which comprises sending counts of people (24) and vehicles (28, 29, 30), classified by type (23), to a remote device (47) to be displayed on a screen (48) of the remote device (47).

12. The method as claimed in any of the preceding claims 9 to 11, wherein the artificial neural network (18) is a recurrent neural network.
